# EUROPÄISCHE PATENTSCHRIFT

(11) **EP 0 688 657 B1**
(45) Veröffentlichungstag und Bekanntmachung des Hinweises auf die Patenterteilung: **12.01.2000**
(21) Anmeldenummer: 95109541.3
(22) Anmeldetag: 20.06.1995
(51) Int. Cl.: B29C 47/08

(54) **Düsenwechselvorrichtung für Extrusionsmaschine**
Die changer for extruder
Dispositif de changement de la matrice pour une extrudeuse

(30) Priorität: 24.06.1994 DE 4422248
(43) Veröffentlichungstag der Anmeldung: 27.12.1995
(73) Patentinhaber: Firma EMIL LIHOTZKY Maschinenfabrik, D-94441 Plattling (DE)
(72) Erfinder: Czarnetzki, Robert, Dipl.-Ing., D-94469 Deggendorf (DE); Lihotzky-Vaupel, Wolfram, D-94557 Niederalteich (DE)
(74) Vertreter: Wunderlich, Rainer, Dipl.-Ing.

(56) Entgegenhaltungen:
- DE-A- 2 947 698
- DE-A- 3 243 184
- DE-A- 3 715 180
- DE-A- 4 306 014

## Beschreibung

Die Erfindung betrifft eine Extrusionsmaschine mit einem Maschinenrahmen, einer Extrusionspresse, mit einer Materialeintrittsöffnung und einer Materialaustrittsöffnung, aus welcher ein Materialstrom in einer Richtung austritt, einem Antrieb für die Extrusionspresse sowie einem im Bereich der Materialaustrittsöffnung vorgesehenen Formwerkzeug und einem diesem zugeordneten Schneidwerkzeug, wobei eine Wechslervorrichtung vorgesehen ist, welche wenigstens ein Trägerelement für zumindest zwei auswechselbare Formwerkzeuge oder Schneidwerkzeuge aufweist, und das Trägerelement im Bereich der Materialaustrittsöffnung relativ zur Extrusionspresse bewegbar angeordnet ist.

Eine derartige Maschine ist aus der DE-C-4306014 bekannt.

Beim Betrieb der Extrusionspresse ist es erforderlich, in gewissen Zeitabständen das Formwerkzeug und/oder Schneidwerkzeug zu wechseln. Bei Extrusionsmaschinen mit stationär angebrachtem Formwerkzeug und Schneidwerkzeug ist es zunächst notwendig, die Extrusionspresse anzuhalten, so daß der Produktionsvorgang unterbrochen wird. Nach dem Auswechseln des Formwerkzeugs oder des Schneidwerkzeugs muß die Produktion wieder angefahren werden. Dieser Anfahrprozeß liefert jedoch zunächst einen gewissen Produktionsausschuß, bis der Produktionsprozeß wieder so eingestellt ist, daß die erwünschte Qualität erzielt wird.

Zur Extrusion von Waschmitteln gibt es beispielsweise Herstellungsverfahren, bei denen zunächst Trockenstoffe verwogen werden und anschließend über mehrere Stockwerke zu einem Mischer transportiert werden. Dort werden verschiedene Flüssigkeiten den pulverigen Stoffen zugesetzt. Das Gemisch wird dann dem Extruder zugeführt. Muß nun, bedingt durch einen Wechsel eines Formwerkzeugs oder eines Schneidwerkzeugs am Extruder, dieser Fertigungsprozeß unterbrochen werden, so verbleibt im Mischer eine Charge trockenen Produktes. Beim Wiederanfahren der Fertigungsanlage muß nun dieses Trockenprodukt zunächst vor dem Extruder ausgeschleust werden, da das Trockenprodukt sonst eine Blockierung der Extruderschnecke verursachen würde. Folglich muß zunächst der Mischvorgang des Fertigungsprozesses so weit angefahren werden, daß der Mischer ein gewünschtes extrudierbares Vorprodukt liefert. Bis die vom Mischer gelieferte Mischung plastisch genug ist, werden mehrere hundert Kilo Material vor dem Extruder ausgeschleust. Die Überprüfung der vom Mischer abgegebenen Mischung erfolgt üblicherweise manuell und ist zeit- und arbeitsaufwendig. Werden diese Vorarbeiten beim Wiederanfahren der Extrusionsmaschine nicht gewissenhaft ausgeführt, so ist infolge eine aufwendige Reinigung des Extruders in sämtlichen produktführenden Organen erforderlich.

Ein Wechsel eines Formwerkzeugs oder eines Schneidwerkzeugs bei einer derartigen Extrusionsmaschine verursacht also nicht nur einen Produktionsausfall während der Wechselarbeiten, sondern darüber hinaus auch einen erheblichen Produktionsverlust beim Wiederanfahren der Extrusionsmaschine.

Bei einer bekannten Extrusionsmaschine wird dieser Produktionsverlust dadurch vermieden, daß das Formwerkzeug und das Schneidwerkzeug durch eine Wechslervorrichtung an der Materialaustrittsöffnung der Extrusionspresse automatisch gewechselt wird. Der Wechsel wird dabei derart ausgeführt, daß ein Unterbrechen des Betriebes der Extrusionspresse nicht mehr notwendig ist.

Bei der bekannten Extrusionsmaschine ist die Wechslervorrichtung mit dem Antrieb und den auswechselbaren Werkzeugen an der Materialaustrittsöffnung der Extrusionspresse angeordnet. Diese Anordnung ist insbesondere dann vorteilhaft, wenn im Bereich der Materialaustrittsöffnung ausreichend Bauraum zur Verfügung steht.

Der Erfindung liegt die **Aufgabe** zugrunde, eine gattungsgemäße Extrusionsmaschine derart weiterzubilden, daß ein Formwechsel auch bei begrenztem Bauraum an der Materialaustrittsöffnung durchführbar ist.

Die Aufgabe wird erfindungsgemäß bei einer gattungsgemäßen Extrusionsmaschine dadurch gelöst, daß das Trägerelement kreisbogenförmig ausgebildet und schwenkbar gelagert ist, und daß die Schwenkachse des Trägerelementes zur Ebene der Materialaustrittsöffnung versetzt und im wesentlichen senkrecht zur Materialaustrittsrichtung angeordnet ist. Das Trägerelement ist als eine gebogene Platte mit einem vorgegebenen, vorzugsweise konstanten Krümmungsradius versehen.

Durch die kreisbogenförmige Ausbildung des Trägerelementes kann die Lagerung und der Antrieb des Trägerelementes aus dem Bereich der Materialaustrittsöffnung verlegt werden. Auch können Wartungsarbeiten an den sich nicht im Betrieb befindlichen Form- und Schneidwerkzeugen des Trägerelementes an den Seitenbereichen der Extrusionsmaschine ausgeführt werden.

Eine Weiterentwicklung der erfindungsgemäßen Extrusionsmaschine besteht darin, daß das Trägerelement an der Extrusionspresse gelagert ist. Durch die Lagerung am Maschinenrahmen der Extrusionspresse wird eine besonders kompakte Maschinenanordnung erreicht.

Es ist hierbei besonders vorteilhaft, daß die Schwenkachse vertikal oder horizontal gerichtet ist, wobei das Trägerelement horizontal-kreisförmig bzw. vertikal-kreisförmig verschwenkbar ist. Das Trägerelement kann auch als ein geschlossener Kreisbogen ausgebildet sein, welcher um die gesamte Extrusionspresse herum bewegbar ist. Durch diese Anordnungen kann der Bauraum seitlich bzw. oberhalb der Extrusionspresse besonders gut ausgenutzt werden.

Es ist eine weitere vorteilhafte Ausführungsform der Erfindung, daß das Trägerelement über einen Rahmen im Mittenbereich der Extrusionspresse gelagert ist. Bei einer derartigen Lagerung wird ein relativ großer Schwenkradius des Trägerelementes erzielt, so daß die Bewegung des Trägerelementes unmittelbar an der Materialaustrittsöffnung im wesentlichen parallel zur Ebene der Materialaustrittsöffnung erfolgt. Hierdurch wird ein schneller Wechselvorgang ermöglicht.

Bei einer anderen erfindungsgemäßen Ausführungsform ist es vorteilhaft, daß dem Formwerkzeug ein Materialausfallschacht zugeordnet ist. Jedem der Formwerkzeuge ist hierbei ein bestimmter, separater Materialausfallschacht zugeordnet. So wird beim Auswechseln von unterschiedlichen Formwerkzeugen vermieden, daß eine unerwünschte Vermischung von zwei unterschiedlich geformten Produkten in einem Materialausfallschacht stattfindet. Es ist insbesondere vorgesehen, daß jedem Formwerkzeug jeweils ein Materialausfallschacht zugeordnet wird.

Erfindungsgemäß besteht eine vorteilhafte Weiterbildung darin, daß der Materialausfallschacht im rechten Winkel zur Materialaustrittsrichtung nach unten angeordnet ist und den Abschneideantrieb und/oder das Schneidwerkzeug aufweist. Hierdurch wird eine Trennung von der Schneideinrichtung und dem Formwerkzeug erreicht, wodurch eine Vereinfachung insbesondere bei Wartungsarbeiten erreicht wird.

Hierbei stellt es eine vorteilhafte Ausführungsform der Erfindung dar, daß der Materialausfallschacht schwenkbar am Trägerelement angeordnet ist. Ein Materialausfallschacht ist dabei jeweils zu einem Formwerkzeug über eine Gelenkverbindung an dem Trägerelement befestigt. In der seitlichen Ruheposition kann der Materialausfallschacht entlang der Gelenkverbindung vom Formwerkzeug weg geschwenkt werden, so daß der Materialausfallschacht, das Formwerkzeug und das Schneidwerkzeug zu Wartungszwecken einfacher zugänglich sind.

Bei einer erfindungsgemäßen Ausführungsform ist es von Vorteil, daß der Materialausfallschacht steckbar am Trägerelement angeordnet ist. Der Materialausfallschacht kann so in einfacher Weise abgenommen oder ausgewechselt werden, was insbesondere bei Wartungsarbeiten oder einem Produktwechsel wünschenswert ist.

Es stellt auch eine vorteilhafte Weiterbildung der Erfindung dar, daß als Antrieb des Trägerelementes ein Motor mit Getriebeanordnung oder eine doppelt wirkende Zylinderanordnung vorgesehen ist. Als Motor wird insbesondere ein Elektromotor vorgesehen, der über ein Zahnradgetriebe oder über eine Seilwindenanordnung in Wirkverbindung mit dem Trägerelement steht. Als doppelt wirkende Zylinder sind insbesondere Pneumatik- oder Hydraulik-Zylinder einsetzbar, welche unmittelbar mit dem Trägerelement in Verbindung stehen.

Gemäß der Erfindung besteht hierbei eine vorteilhafte Weiterbildung darin, daß das Trägerelement eine Kette aufweist, die mit dem Antrieb verbunden ist. Die Kette kann dabei sowohl von einem Motor als auch durch Druckzylinder angetrieben werden. Das Trägerelement kann hierbei aus einer Kettenanordnung bestehen, an welcher die Form- und/oder Schneidwerkzeuge befestigt werden.

Bei einer weiteren Ausführungsform der Erfindung ist es von Vorteil, daß das Trägerelement ein Seil aufweist, daß mit dem Antrieb verbunden ist. Insbesondere bei einem Stahlseil besteht an den Umlenkrollen nur eine geringe Reibung, so daß zum Verschwenken des Trägerelementes relativ geringe Stellkräfte notwendig sind.

Eine andere vorteilhafte Weiterbildung der Erfindung besteht darin, daß das Trägerelement einen Schubschwing-Mechanismus aufweist, der mit dem Antrieb verbunden ist. Hierdurch wird ebenfalls eine effiziente Stellbewegung des Trägerelementes ermöglicht.

Die Wechslervorrichtung gestattet es, während des Produktionsprozesses das Form- und/oder Schneidwerkzeug schnell und einfach auszuwechseln, da kurzfristig zwischen zwei Werkzeugen "umgeschaltet" werden kann, wobei das neue Werkzeug vor die Öffnung der Extrusionspresse bewegt wird, während das benutzte Werkzeug aus der Öffnung der Extrusionspresse heraus bewegt wird und anschließend aus der Wechslervorrichtung entnommen und überholt oder gereinigt werden kann.

Durch die Erfindung ist ein Abstellen des Produktionsprozesses für einen Formwerkzeugwechsel bzw. einen Schneidwerkzeugwechsel nicht mehr erforderlich und es fallen auch keine diesbezüglichen Produktionsabfälle mehr an. Die Extrusionsmaschine und die vorgeschalteten Maschinen können kontinuierlich durchlaufen.

Das Trägerelement der Wechslervorrichtung kann entweder nur die Schneidwerkzeuge oder nur die Formwerkzeuge aufweisen, wobei dann jeweils das Formwerkzeug bzw. das Schneidwerkzeug bezüglich der Extrusionspresse auf herkömmliche Weise stationär angeordnet sind. In einer besonders bevorzugten Ausgestaltung werden jedoch sowohl die Formwerkzeuge als auch die Schneidwerkzeuge vom Trägerelement aufgenommen, so daß die Wechslervorrichtung Formwerkzeuge und Schneidwerkzeuge auswechseln kann. Das hat den Vorteil, daß das Bedienungspersonal bei jedem Wechsel des Formwerkzeugs auch gleichzeitig das Schneidwerkzeug sichten und kontrollieren kann und dann bei Bedarf entscheiden kann, ob auch das Schneidwerkzeug ausgewechselt wird oder ohne Austausch wiederverwendet wird. Es kann auch jeweils ein Trägerelement für die Schneid- und die Formwerkzeuge vorgesehen sein, wobei die beiden Trägerelemente unabhängig voneinander bewegbar sind.

Vorteilhaft ist außerdem, wenn das Schneidwerkzeug von einer auf der der Extrusionspresse zugewandten Seite des Formwerkzeugs angeordneten, rotierbar gelagerten Messeranordnung gebildet ist, die von einem Schneideantrieb beaufschlagt ist. Bei einem derartigen Rotationsmessersystem berühren die Messer unmittelbar das Formwerkzeug bzw. werden während ihrer Rotation an das Formwerkzeug angepreßt. Die Drehzahlen der Messeranordnung können dabei zwischen wenigen Umdrehungen pro Minute bis zu mehreren Tausend Umdrehungen pro Minute betragen. Hierzu ist zwischen Antrieb und Schneidwerkzeug ein Getriebe vorgesehen, das vorzugsweise stufenlos verstellbar ist; aber auch der Antrieb selbst kann stufenlos verstellbar sein. Ein besonders kompakter Aufbau ist dann gewährleistet, wenn im Antriebsstrang zwischen Schneidantrieb und Schneidwerkzeug zumindest ein Umlenkgetriebe vorgesehen ist. Der Antrieb ist dabei auf dem Trägerelement des Schneidwerkzeuges angeordnet.

Ist im Antriebsstrang zwischen Schneidantrieb und Schneidwerkzeug zumindest eine Ausgleichswelle vorgesehen, so treten auch bei hohen Drehzahlen des Schneidwerkzeugs nur geringfügige Schwingungen auf.

Weitere vorteilhafte Ausgestaltungen der Erfindung werden in den verbliebenen Unteransprüchen angegeben.

Die Erfindung wird nachfolgend beispielhaft unter Bezugnahme auf die Zeichnung näher erläutert; in dieser zeigt:

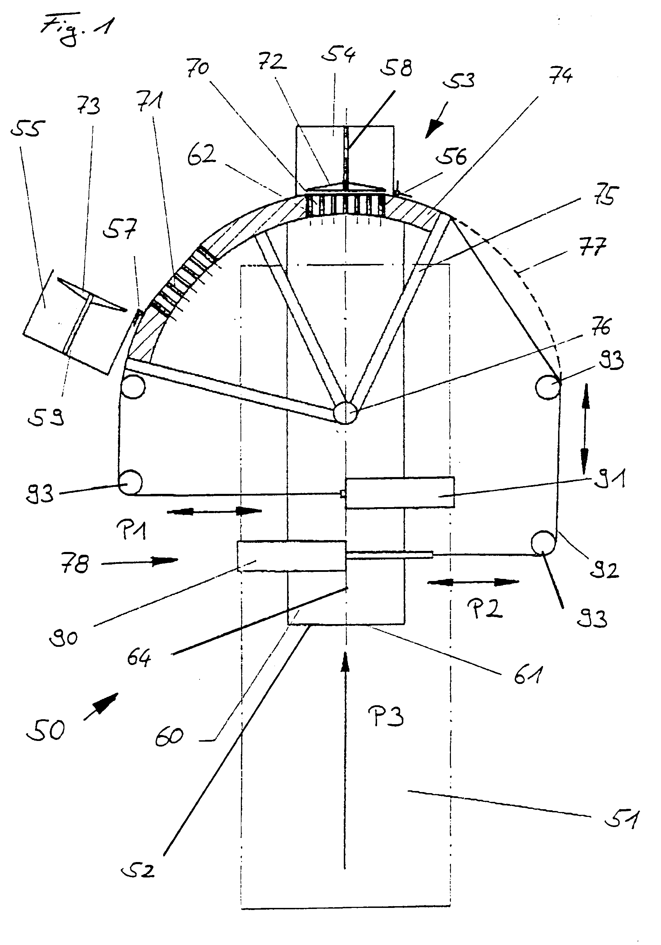

- Fig. 1: eine Draufsicht einer Extrusionsmaschine gemäß der vorliegenden Erfindung;
- Fig. 2: eine schematische Seitenansicht einer Extrusionspresse mit stationärem Formwerkzeug und wechselbarem Schneidwerkzeug und
- Fig. 3: eine schematische teilweise geschnittene Seitenansicht einer Extrusionsmaschine mit stationärem Schneidwerkzeug und wechselbarem Formwerkzeug.

Eine erfindungsgemäße Extrusionsmaschine 50 weist einen Maschinenrahmen 51 mit einer Extrusionspresse 52 auf. Die Extrusionspresse 52 weist ein Zylindergehäuse 60 mit einer Materialeintrittsöffnung 61 und einer Materialaustrittsöffnung 62 auf.

An der Materialaustrittsöffnung 62 ist ein Trägerelement 74 in Form einer gebogenen Platte einer Wechslervorrichtung 53 angeordnet. Das Trägerelement 74 ist über einen Wechslerrahmen 75 an dem Zylindergehäuse 60 schwenkbar gelagert.

Die Schwenkachse 76 ist hierbei senkrecht zur Längsachse 64 des Zylindergehäuses 60 gerichtet, in der die Extrusionsschnecke angeordnet ist. Der Schwenkbereich 77 des Trägerelements 74 ist mit einer gestrichelten Linie dargestellt.

Im Trägerelement 74 sind zwei Formwerkzeuge 70 und 71 angeordnet. Die Formwerkzeuge 70 und 71 weisen jeweils Bohrungen auf, welche in Betriebsstellung parallel zur Materialförderrichtung P3 und zur Materialaustrittsrichtung ausgebildet sind. Den Formwerkzeugen 70 und 71 sind jeweils ein Schneidwerkzeug 72 und 73 zugeordnet. Über eine Schneidwelle 58, 59 ist das jeweilige Schneidwerkzeug 72, 73 in einem Materialausfallschacht 54, 55 gelagert. Die Schneidwelle 58, 59 wird jeweils über einen nicht dargestellten Antrieb am Materialausfallschacht 54, 55 angetrieben.

Der Materialausfallschacht 54, 55 ist über eine Gelenkverbindung 56, 57 an dem Trägerelement 74 schwenkbar befestigt. Der Materialausfallschacht 54 ist in der geschlossenen Betriebsstellung dargestellt. Im Betrieb wird eine Masse in Materialförderrichtung P3 mittels der Extrusionspresse 52 durch das Formwerkzeug 70 gepreßt. Die gepreßte und geformte Masse wird hinter dem Formwerkzeug 70 durch das Schneidwerkzeug 72 abgelängt und im Materialausfallschacht aufgefangen und abgeleitet.

Der Materialausfallschacht 55 befindet sich in Ruheposition und ist in einer aufgeklappten Stellung dargestellt. In dieser Stellung können Wartungs- oder Auswechselarbeiten an dem Formwerkzeug 71 und dem Schneidwerkzeug 73 durchgeführt werden.

Die Wechslervorrichtung 53 wird über einen doppelt wirkenden Zylinderantrieb 78 bewegt, so daß sich entweder das Formwerkzeug 70 oder das Formwerkzeug 71 in Betriebsstellung befindet. Das kreisbogenförmige Trägerelement 74 ist hierbei über eine um Umlenkrollen 93 geführte Kette 92 mit zwei doppelt wirkenden Zylindern 90 und 91 verbunden. Die Bewegung der doppelt wirkenden Zylinder 90 und 91 wird jeweils durch die Pfeile P1 und P2 dargestellt. Die doppelt wirkenden Zylinder 90 und 91 werden aufeinander abgestimmt so gesteuert, daß über die Kette 92 eine Verdrehung des Trägerelementes 74 um die Schwenkachse 76 erfolgt. Die Stellbewegung des Trägerelementes 74 zwischen den beiden Betriebspositionen für die Schneidwerkzeuge 70 und 71 erfolgt mit einer bestimmten Geschwindigkeit, die so eingestellt ist, daß der Betrieb der Extrusionspresse 52 nicht unterbrochen werden muß.

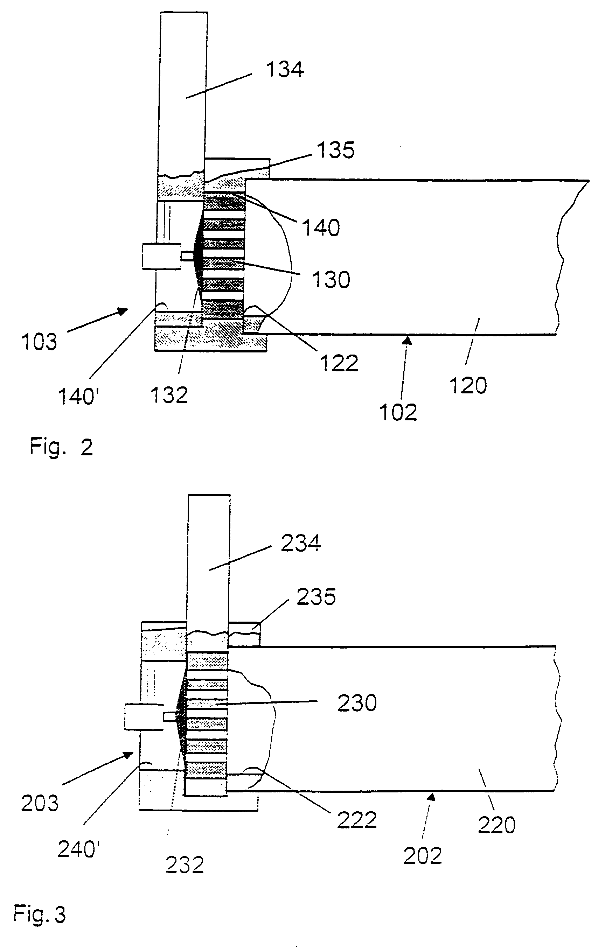

Eine Abwandlung der bisher beschriebenen Extrusionsmaschine ist in Fig. 2 dargestellt. Die Extrusionspresse 102 ist am vorderen Ende ihres Zylindergehäuses 120 im Bereich der Materialaustrittsöffnung 122 mit einem Wechslergehäuse 135 verbunden. Das Wechslergehäuse 135 besitzt eine durchgehende Bohrung 140, in welche an dem Zylindergehäuse 120 zugewandten Ende ein Formwerkzeug 130 stationär, aber auswechselbar eingesetzt ist. Auf der von der Materialaustrittsöffnung 122 abgewandten Seite des Formwerkzeugs 130 ist ein drehbares Trägerelement angeordnet, das auf bereits beschriebene Weise um seine senkrecht zur Achse des Zylindergehäuses 120 gelegene Achse drehbar ist. Das Trägerelement 134 weist dabei eine Mehrzahl von Bohrungen 140' auf, von denen in Fig. 2 nur eine gezeigt ist. In jeder dieser Bohrungen 140' ist ein Schneidwerkzeug 132 auf ebenfalls beschriebene Weise angeordnet.

Bei dieser Extrusionsmaschine läßt sich durch Verdrehen oder Verschwenken des Trägerelementes 134 jeweils ein neues Schneidwerkzeug hinter das Formwerkzeug 130 einbringen. Selbstverständlich können bei dieser Ausgestaltung auch die anderen beschriebenen Trägerelement-Versionen Verwendung finden.

Fig. 3 zeigt eine der Fig. 2 ähnliche Ausgestaltung, wobei jedoch das Schneidwerkzeug 232 in der Bohrung 240' des Wechslergehäuses 235 hinter dem Formwerkzeug 230 stationär angeordnet ist. Im hinteren Bereich des Wechslergehäuses 235, auf der der Materialaustrittsöffnung 222 zugewandten Seite des Schneidwerkzeugs 232, ist ein Trägerelement 234 vorgesehen, das auf die gleiche Weise wie die bislang beschriebenen Trägerelemente ausgebildet sein kann. Im Trägerelement 234 ist eine Mehrzahl von Formwerkzeugen 230 angeordnet, von denen hier nur eines gezeigt ist. Durch Verdrehen, Verschwenken oder translatorisches Bewegen des jeweiligen Trägerelementes 234 kann zwischen den im Trägerelement 234 vorgesehenen Formwerkzeugen 230 gewechselt werden, wobei jeweils ein Formwerkzeug 230 in die Bohrung 240' zwischen die Materialaustrittsöffnung 222 und das Schneidwerkzeug 232 bewegt wird. Die Ausführungen von Fig. 2 und Fig. 3 können auch kombiniert werden, so daß je nach Bedarf entweder das Formwerkzeug oder das Schneidwerkzeug beliebig gewechselt werden können.

Die bisher beschriebenen Ausführungsbeispiele der Extrusionsmaschine nach der vorliegenden Erfindung gehen von einer horizontalen Anordnung der Extrusionspresse und der vertikalen Anordnung der Bewegungsebene des Trägerelementes im Wechslergehäuse aus. Genausogut kann aber auch die Extrusionspresse vertikal angeordnet werden und die Bewegungsachse des Trägerelementes im Wechslergehäuse kann horizontal angeordnet sein; es sind aber auch alle zwischen diesen Extrempositionen liegende Winkel möglich.

Die Extrusionsmaschine gemäß der vorliegenden Erfindung kann auch sinngemäß für Kunststoff- und Spritzgußwerkzeuge benützt werden, indem man statt Einlegeformwerkzeugen beispielsweise an einem horizontal austragenden Extruder einen vertikal eingebauten Wechsler mit aufgebauten Spritzgußwerkzeugen für Metall- oder Kunststoff-Einspritzung so anordnet, daß die Spritzgußwerkzeuge in schneller Taktfolge benutzt werden können. Auf diese Weise kann ohne weitere Nachteile die Spritzfolgetaktzeit erhöht werden, die Auskühlzeit verlängert werden und der Auswurf der gespritzen Teile auf eine dritte Station verlegt werden. Die Wirtschaftlichkeit wird durch dieses Verfahren erheblich gesteigert. Im Wechslersystem integrierbar sind Heizflächenanordnungen über Drehverbindungen mit Dampf oder über Schleifkontakte elektrisch versorgbar vorgesehen. Ebenfalls können Kühlanordnungen vorgesehen sein, wobei Drehverbindungen die Zufuhr spezieller Kühlmedien wie Kaltwasser oder Sole gestatten.

Die Wechselvorrichtung kann auch als Nachrüstteil für bereits vorhandene Extruder bzw. Schneckenpressen jeglicher Größe oder Ausführung ausgestaltet sein.

Während des Wechselvorganges kann der Extrusions-Arbeitsdruck durch geeignete, dem Fachmann bekannte Vorrichtungen und Steuerungen herabgesetzt werden, der Arbeitsdruck kann aber auch bereits konstruktiv flexibel festgelegt sein.

Ein praktisches Beispiel für die Kosteneinsparung beim Einsatz der erfindungsgemäßen Extrusionsmaschine hat ergeben, daß bei einer Stundenleistung von 6000 kg/h je Extrusionspresse und bei einem Kilopreis von DM 2,-- für das in der Extrusionspresse verarbeitete Material ein Produktionsausfall von DM 12.000,-- in jeder Stillstandsstunde des Extruders entsteht. Rechnet man damit, daß die Maschine bis zu sechsmal am Tag abgeschaltet werden muß, um einen Messerwechsel vornehmen zu können, die 30 Minuten Zeit beansprucht, so werden mit der Erfindung bei 240 Arbeitstagen im Jahr mehrere Millionen DM an Produktionsausfall eingespart.

## Patentansprüche

1. Extrusionsmaschine mit einem Maschinenrahmen (51), einer Extrusionspresse (52), mit einer Materialeintrittsöffnung (61) und einer Materialaustrittsöffnung (62), aus welcher ein Materialstrom in einer Richtung (P3) austritt, einem Antrieb für die Extrusionspresse (52) sowie einem im Bereich der Materialaustrittsöffnung (62) vorgesehenen Formwerkzeug (70, 71) und einem diesem zugeordneten angetriebenen Schneidwerkzeug (72, 73), wobei eine Wechslervorrichtung (53) vorgesehen ist, welche wenigstens ein Trägerelement (74) für zumindest zwei auswechselbare Formwerkzeuge (70, 71) oder Schneidwerkzeuge (72, 73) aufweist, und das Trägerelement (74) im Bereich der Materialaustrittsöffnung (61) relativ zur Extrusionspresse (52) bewegbar angeordnet ist,
dadurch **gekennzeichnet,**
- daß das Trägerelement (74) kreisbogenförmig ausgebildet ist,
- daß das Trägerelement (74) über einen Rahmen (75) um eine Schwenkachse (76) schwenkbar gelagert ist, welche zur Richtung des Materialstromes im wesentlichen senkrecht angeordnet ist, und
- daß die Schwenkachse (76) von einer Ebene der Materialaustrittsöffnung (62) zur Extrusionspresse (52) hin versetzt und an dieser angeordnet ist.

2. Extrusionsmaschine nach Anspruch 1,
dadurch **gekennzeichnet,**
daß die Schwenkachse (76) vertikal oder horizontal gerichtet ist, wobei das Trägerelement (74) horizontal-kreisförmig bzw. vertikal-kreisförmig schwenkbar ist.

3. Extrusionsmaschine nach Anspruch 1 oder 2,
dadurch **gekennzeichnet,**
daß das Trägerelement (74) über den Rahmen (75) im Mittenbereich der Extrusionspresse (52) gelagert ist.

4. Extrusionsmaschine nach einem der Ansprüche 1 bis 3,
dadurch **gekennzeichnet,**
daß dem Formwerkzeug (70,71) ein Materialausfallschacht (54,55) zugeordnet ist.

5. Extrusionsmaschine nach Anspruch 4,
dadurch **gekennzeichnet,**
daß der Materialausfallschacht (54,55) im rechten Winkel zur Materialaustrittsrichtung nach unten angeordnet ist und den Schneideantrieb und/oder das Schneidwerkzeug (72,73) aufweist.

6. Extrusionsmaschine nach Anspruch 4 oder 5,
dadurch **gekennzeichnet,**
daß der Materialausfallschacht (54,55) schwenkbar am Trägerelement (74) angeordnet ist.

7. Extrusionsmaschine nach einem der Ansprüche 4 bis 6,
dadurch **gekennzeichnet,**
daß der Materialausfallschacht (54, 55) steckbar am Trägerelement (74) angeordnet ist.

8. Extrusionsmaschine nach einem der Ansprüche 1 bis 7,
dadurch **gekennzeichnet,**
daß als Antrieb des Trägerelementes (74) ein Motor mit Getriebeanordnung oder eine doppelt wirkende Zylinderanordnung (78) vorgesehen ist.

9. Extrusionsmaschine nach Anspruch 8,
dadurch **gekennzeichnet,**
daß das Trägerelement (74) eine Kette (92) aufweist, die mit dem Antrieb verbunden ist.

10. Extrusionsmaschine nach Anspruch 8,
dadurch **gekennzeichnet,**
daß das Trägerelement (74) ein Seil aufweist, das mit dem Antrieb verbunden ist.

11. Extrusionsmaschine nach einem der Ansprüche 8 bis 10,
dadurch **gekennzeichnet,**
daß das Trägerelement (74) einen Schubschwing-Mechanismus aufweist, der mit dem Antrieb verbunden ist.

12. Extrusionsmaschine nach einem der vorhergehenden Ansprüche,
dadurch **gekennzeichnet**,
daß mehr als zwei auswechselbare Formwerkzeuge (70, 71) und/oder Schneidwerkzeuge (72, 73) vorgesehen sind.

13. Extrusionsmaschine nach einem der Ansprüche 8 bis 12,
dadurch **gekennzeichnet**,
daß der Antrieb für die Bewegung des Trägerelements (74) von einem Elektromotor gebildet ist.

14. Extrusionsmaschine nach Anspruch 13,
dadurch **gekennzeichnet**,
daß zwischen dem Motor und dem Trägerelement (74) ein Schneckenradantrieb vorgesehen ist.

15. Extrusionsmaschine nach einem der vorhergehenden Ansprüche,
dadurch **gekennzeichnet**,
daß das Schneidwerkzeug (72, 73) von einer auf der von der Extruderpresse (52) abgewandten Seite des Formwerkzeugs (70, 71) angeordneten, rotierbar gelagerten Messeranordnung gebildet ist, die von einem Schneidantrieb beaufschlagt ist.

16. Extrusionsmaschine nach Anspruch 15,
dadurch **gekennzeichnet**,
daß im Antriebsstrang zwischen Schneidantrieb und Schneidwerkzeug (72, 73) zumindest ein Umlenkgetriebe vorgesehen ist.

17. Extrusionsmaschine nach einem der vorhergehenden Ansprüche,
dadurch **gekennzeichnet**,
daß der Schneidantrieb von einem Elektromotor gebildet ist.

18. Extrusionsmaschine nach einem der Ansprüche 1 bis 17,
dadurch **gekennzeichnet**,
daß der Schneidantrieb von einem Hydraulikmotor gebildet ist.

19. Extrusionsmaschine nach einem der Ansprüche 1 bis 18,
dadurch **gekennzeichnet**,
daß der Schneidantrieb von einem Pneumatikmotor gebildet ist.

20. Extrusionsmaschine nach einem der vorhergehenden Ansprüche,
dadurch **gekennzeichnet**,
daß im Antriebsstrang zwischen Schneidantrieb und Schneidwerkzeug (72, 73) zumindest eine Ausgleichswelle vorgesehen ist.

## Claims

1. Extrusion machine comprising a machine frame (51), an extrusion press (52) having a material inlet opening (61) and a material outlet (62), from which a material flow passes out in one direction (P3), a drive means for the extrusion press (52) and a die (70, 71) located in the vicinity of the material outlet opening (62) and a driven cutting cutting tool (72, 73) associated with said die (70, 71), a changer mechanism (53) being provided, which has at least a support member (74) for at least two replaceable dies (70, 71) or cutting tools (72, 73), and the support member (74) is movably arranged relative to the extrusion press (52) in the vicinity of the material outlet opening (61),
**characterized** in that
- the support member (74) is circular arc-shaped,
- the support member (74) is mounted by means of a frame (75) for pivoting about a pivot pin (76) which is positioned substantially perpendicular to the direction of the material flow, ad
- the pivot pin (76) is displaced relative to a plane of the material outlet opening (62) towards the extrusion press (52) and mounted to the latter.

2. Extrusion machine according to claim 1,
**characterized** in that
the pivot pin (76) is vertically or horizontally directed, the support member (74) being pivotable with a circular motion in a horizontal or vertical direction.

3. Extrusion machine according to claim 1 or 2,
**characterized** in that
the support member (74) is mounted by means of a frame (75) in the central area of the extrusion press (52).

4. Extrusion machine according to one of the claims 1 to 3,
**characterized** in that
a material discharge shaft (54, 55) is associated with the die (70, 71).

5. Extrusion machine according to claim 4,
**characterized** in that
the material discharge shaft (54, 55) is positioned downwards at a right angle to the material discharge direction and includes the cutting drive and/or the cutting tool (72, 73).

6. Extrusion machine according to claim 4 or 5,
**characterized** in that
the material discharge shaft (54, 55) is pivotably mounted to the support member (74).

7. Extrusion machine according to one of the claims 4 to 6,
**characterized** in that
the material discharge shaft (54, 55) can be plugged onto the support member (74).

8. Extrusion machine according to one of the claims 1 to 7,
**characterized** in that
the drive means of the support member (74) is constituted by a motor with a gear arrangement or a double-acting cylinder arrangement (78).

9. Extrusion machine according to claim 8,
**characterized** in that
the support member (74) includes a chain (92) which is connected to the drive means.

10. Extrusion machine according to claim 8,
**characterized** in that
the support member (74) includes a cable which is connected to the drive means.

11. Extrusion machine according to one of the claims 8 to 10,
**characterized** in that
the support member (74) includes a slider swing mechanism which is connected to the drive means.

12. Extrusion machine according to one of the preceding claims,
**characterized** in that
more than two replaceable dies (70, 71) and/or cutting tools (72, 73) are provided.

13. Extrusion machine according to one of the claims 8 to 12,
**characterized** in that
the drive means for moving the suport member (74) is formed by an electric motor.

14. Extrusion machine according to claim 13,
**characterized** in that
a worm drive is provided between the motor and the support member (74).

15. Extrusion machine according to one of the preceding claims,
**characterized** in that
the cutting tool (72, 73) is formed by a knife arrangement mounted in rotary manner arranged on the side of the die (70, 71) remote from the extrusion press (52) and which is subject to the action of a cutting drive.

16. Extrusion machine according to claim 15,
**characterized** in that
there is at least one deflection gear in the drive line between the cutting drive and the cutting tool (72, 73).

17. Extrusion machine according to one of the preceding claims,
**characterized** in that
the cutting drive is formed by an electric motor.

18. Extrusion machine according to one of the claims 1 to 17,
**characterized** in that
the cutting drive is formed by a hydraulic motor.

19. Extrusion machine according to one of the claims 1 to 18,
**characterized** in that
the cutting drive is formed by a pneumatic motor.

20. Extrusion machine according to one of the preceding claims,
**characterized** in that
there is at least one differential shaft in the drive line between the cutting drive and the cutting tool (72, 73).

## Revendications

1. Extrudeuse avec un bâti de machine (51), une presse d'extrusion (52), avec une ouverture (61) d'entrée de matière et une ouverture (62) de sortie de matière, depuis laquelle sort un flux de matière dans une direction (P3), un entraînement pour la presse d'extrusion (52) ainsi qu'un outil de formage (70, 71) prévu au niveau de l'ouverture (62) de sortie de matière et un outil de coupe entraîné (72, 73) associé à celui-ci, un dispositif changeur (53) étant prévu, qui présente au moins un élément support (74) pour au moins deux outils de formage (70, 71) ou outils de coupe (72, 73) interchangeables, et l'élément support (74) étant placé au niveau de l'ouverture (61) de sortie de matière de manière mobile par rapport à la presse d'extrusion (52), ***caractérisée en ce que***
- l'élément support (74) est formé en arc de cercle,
- l'élément support (74) est monté pivotant autour d'un axe de pivotement (76) par l'intermédiaire d'un châssis (75), lequel axe est placé pour l'essentiel perpendiculaire à la direction du flux de matière, et
- par rapport à un plan de l'ouverture (62) de sortie de matière, l'axe de pivotement (76) est décalé en direction de la presse d'extrusion (52) et est placé sur celle-ci.

2. Extrudeuse selon la Revendication 1, ***caractérisée en ce que*** l'axe de pivotement (76) est orienté verticalement ou horizontalement, l'élément support (74) pouvant pivoter selon un cercle horizontal ou vertical.

3. Extrudeuse selon la Revendication 1 ou 2, ***caractérisée en ce que*** l'élément support (74) est monté par l'intermédiaire du châssis (75) dans la zone centrale de la presse d'extrusion (52).

4. Extrudeuse selon l'une quelconque des Revendications 1 à 3, ***caractérisée en ce qu***'une gaine (54, 55) de chute de matière est associée à l'outil de formage (70, 71).

5. Extrudeuse selon la Revendication 4, ***caractérisée en ce que*** la gaine de chute (54, 55) de matière est placée vers le bas à angle droit par rapport à la direction de sortie de matière et présente l'entraînement de coupe et/ou l'outil de coupe (72, 73).

6. Extrudeuse selon la Revendication 4 ou 5, ***caractérisée en ce que*** la gaine (54, 55) de chute de matière est placée pivotante sur l'élément support (74).

7. Extrudeuse selon l'une quelconque des Revendications 4 à 6, ***caractérisée en ce que*** la gaine (54, 55) de chute de matière est montée enfichable sur l'élément support (74).

8. Extrudeuse selon l'une quelconque des Revendications 1 à 7, ***caractérisée en ce que***, comme entraînement de l'élément support (74), il est prévu un moteur avec système d'engrenages ou un système de cylindre à double action (78).

9. Extrudeuse selon la Revendication 8, ***caractérisée en ce que*** l'élément support (74) présente une chaîne (92) qui est reliée à l'entraînement.

10. Extrudeuse selon la Revendication 8, ***caractérisée en ce que*** l'élément support (74) présente un câble qui est relié à l'entraînement.

11. Extrudeuse selon l'une quelconque des Revendications 8 à 10, ***caractérisée en ce que*** l'élément support (74) présente un mécanisme bielle-manivelle oscillant qui est relié à l'entraînement.

12. Extrudeuse selon l'une quelconque des Revendications précédentes, ***caractérisée en ce qu***'il est prévu plus de deux outils de formage (70, 71) et/ou outils de coupe (72, 73) interchangeables.

13. Extrudeuse selon l'une quelconque des Revendications 8 à 12, ***caractérisée en ce que*** l'entraînement pour le mouvement de l'élément support (74) est constitué par un moteur électrique.

14. Extrudeuse selon la Revendication 13, ***caractérisée en ce qu***'il est prévu un entraînement par roue à denture hélicoïdale entre le moteur et l'élément support (74).

15. Extrudeuse selon l'une quelconque des Revendications précédentes, ***caractérisée en ce que*** l'outil de coupe (72, 73) est constitué par un système de lames monté rotatif et placé sur le côté de l'outil de formage (70, 71) opposé à la presse d'extrusion (52), système qui est actionné par un entraînement de coupe.

16. Extrudeuse selon la Revendication 15, ***caractérisée en ce qu***'au moins un engrenage de renvoi est prévu entre l'entraînement de coupe et l'outil de coupe (72, 73).

17. Extrudeuse selon l'une quelconque des Revendications précédentes, ***caractérisée en ce que*** l'entraînement de coupe est constitué par un moteur électrique.

18. Extrudeuse selon l'une quelconque des Revendications 1 à 17, ***caractérisée en ce que*** l'entraînement de coupe est constitué par un moteur hydraulique.

19. Extrudeuse selon l'une quelconque des Revendications 1 à 18, ***caractérisée en ce que*** l'entraînement de coupe est constitué par un moteur pneumatique.

20. Extrudeuse selon l'une des Revendications précédentes, ***caractérisée en ce qu***'au moins un arbre compensateur est prévu sur la ligne d'entraînement entre l'entraînement de coupe et l'outil de coupe (72, 73).
